# EUROPÄISCHE PATENTSCHRIFT

(11) **EP 0 772 830 B1**
(45) Veröffentlichungstag und Bekanntmachung des Hinweises auf die Patenterteilung: **14.10.1998**
(21) Anmeldenummer: 95924168.8
(22) Anmeldetag: 04.07.1995
(51) Int. Cl.: G06F 13/38, H04L 12/46

(54) **DATENREDUKTION FÜR BUSKOPPLER**
DATA REDUCTION FOR BUS COUPLERS
REDUCTION DE DONNEES POUR COUPLEURS DE BUS

(30) Priorität: 22.07.1994 DE 4426094
(43) Veröffentlichungstag der Anmeldung: 14.05.1997
(73) Patentinhaber: Siemens Nixdorf Informationssysteme AG, 33106 Paderborn (DE)
(72) Erfinder: KLEINEBERG, Michael, D-33165 Lichtenau (DE); ZACHARIAS, Ralph, D-33175 Bad Lippspringe (DE)
(74) Vertreter: Epping, Wilhelm, Dr.-Ing.
(86) Internationale Anmeldenummer: DE9500863
(87) Internationale Veröffentlichungsnummer: WO9603695

(56) Entgegenhaltungen:
- EP-A- 0 348 148
- EP-A- 0 395 416
- EP-A- 0 549 217
- EP-A- 0 566 935
- WO-A-91/13504

## Beschreibung

### Technisches Gebiet

Das Verfahren betrifft die Kopplung von Bussystemen über Multiplex-Verbindungen.

### Stand der Technik

Einrichtungen zur die Verbindung von Bussystemen über größere Entfernungen werden als Buskoppler bezeichnet. Insbesondere die Kopplung über Glasfaserverbindungen ist von großer Bedeutung. Dabei sind zwei Buskoppler durch eine Verbindungsstrecke, hier eine Glasfaserleitung, miteinander verbunden. Jeder Buskoppler setzt die Signale auf seinem Bussystem um und überträgt sie über die Verbindungsstrecke zu dem anderen Buskoppler, welcher den Bus entsprechend beaufschlagt. Ein Bussystem verwendet Daten- und Steuerleitungen, wobei die Datenleitungen an durch die Steuerleitungen bestimmten Zeitpunkten gültige Werte besitzen. Ein einfacher Buskoppler überwacht kontinuierlich die Steuerleitungen und überträgt bei einer Änderung sowohl den Zustand der Datenleitungen als auch den geänderten Zustand der Steuerleitungen. Dabei richtet sich die notwendige Datenübertragungsrate auf der Glasfaserverbindung nach der Anzahl der Bits und der durch das Busprotokoll vorgeschriebenen Geschwindigkeit. Für die Kopplung von SCSI-Bussystemen nach ANSI X3.131 sind beispielsweise 8 Bit Daten, 1 Bit Parität und der Zustand von 9 Steuerleitungen zu übertragen. Hierzu eignen sich Parallel-Seriell-Umsetzer mit 10 Bit Breite. Da für die Übermittlung eines Bytes zwei Wechsel der Steuerleitung ACK bzw. REQ notwendig sind, werden vier Bitpakete von 10 Bit übertragen. Bei einer maximalen Rate von 5 MByte/sec auf dem Bus ergibt dies eine Datenrate von mindestens 200 MBit/sec entsprechend 100 MHz Signalfrequenz auf der seriellen Verbindung. Durch Taktinformation wird die notwendige Bandbreite weiter erhöht. Die Datenrate auf dem Bus von 5 MByte/sec entspricht jedoch nur einer Datenrate von 50 MBit/sec auf der seriellen Leitung, die damit nur zu einem Viertel ausgenutzt werden kann.

Aufgabe der Erfindung ist es, die Buskoppler so zu betreiben, daß die Datenrate auf der Verbindungsleitung nur wenig größer ist als die vom Bussystem maximal gelieferte Datenrate.

### Darstellung der Erfindung

Die in den Patentansprüchen definierte Erfindung beruht auf der Beobachtung, daß in der Datentransferphase jeweils nur ein bestimmter Buszustandswechsel auftritt. Demgemäß wird die Übertragungsverbindung während dieser Zeit auch in einem Sychnronmodus betrieben, in dem jedes Datenpaket implizit zu einer Aktivierung von Steuerleitungen führt. Für die Quittungssignale werden gleichfalls Datenpakete gesendet, deren Inhalt verworfen wird und statt dessen zur Aktivierung einer Steuerleitung führt. Auf die Steuerpakete kann dadurch verzichet werden und damit die benötigte Bandbreite auf ein Viertel gesenkt werden.

### Kurzbeschreibung der Zeichnungen

Es zeigen
- Fig. 1: die Anordnung von zwei Bussegmenten mit zugehörigen Kopplern und drei Geräten,
- Fig. 2: eine schematische Schaltung für einen einfachen Koppler,
- Fig. 3: eine schematische Schaltung für einen verbesserten Koppler,
- Fig. 4: ein Zustandsdiagramm für den zu übertragenden Teilstatus,
- Fig. 5: ein Ablaufdiagramm für die Datentransferphase.

### Detaillierte Beschreibung der Erfindung

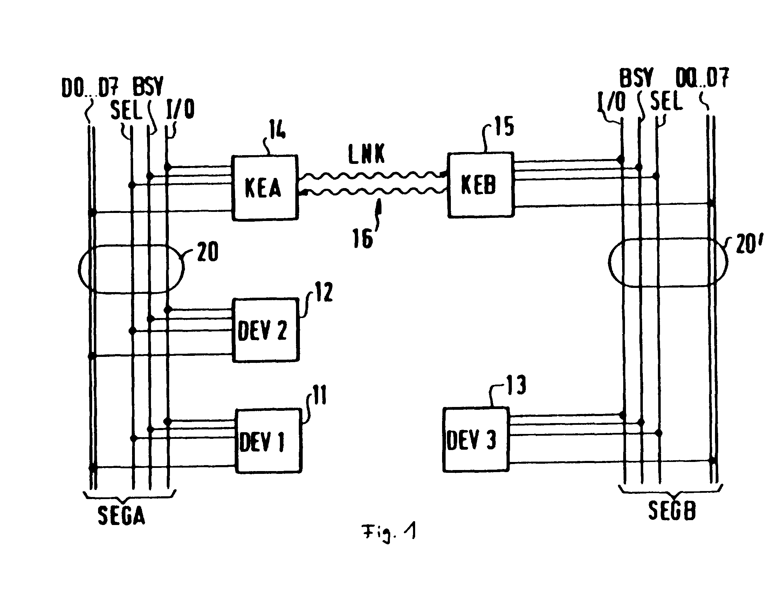

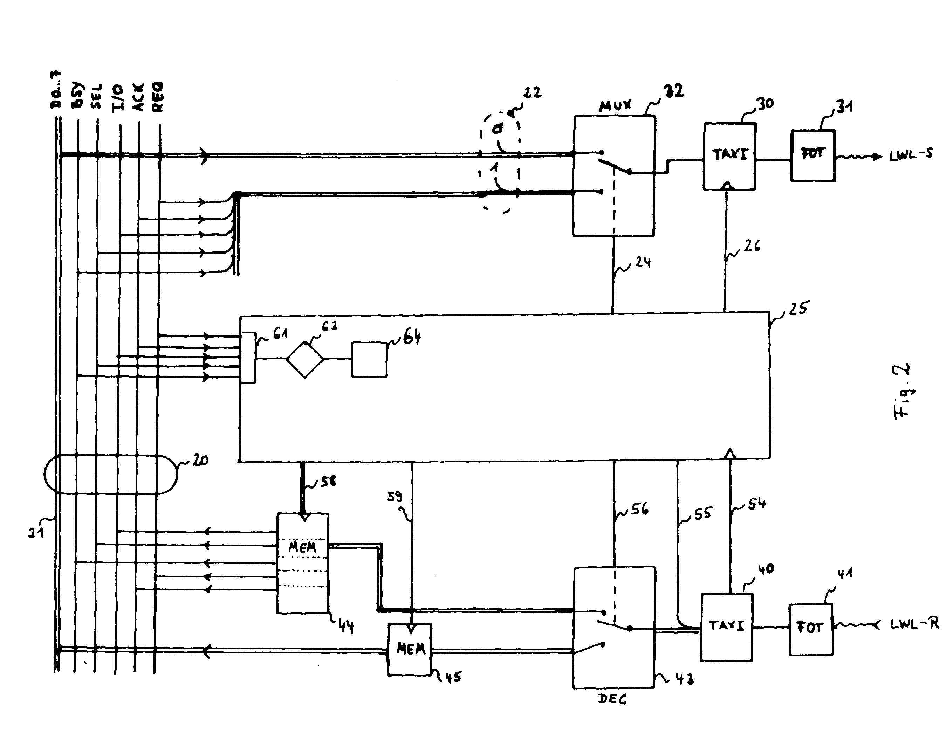

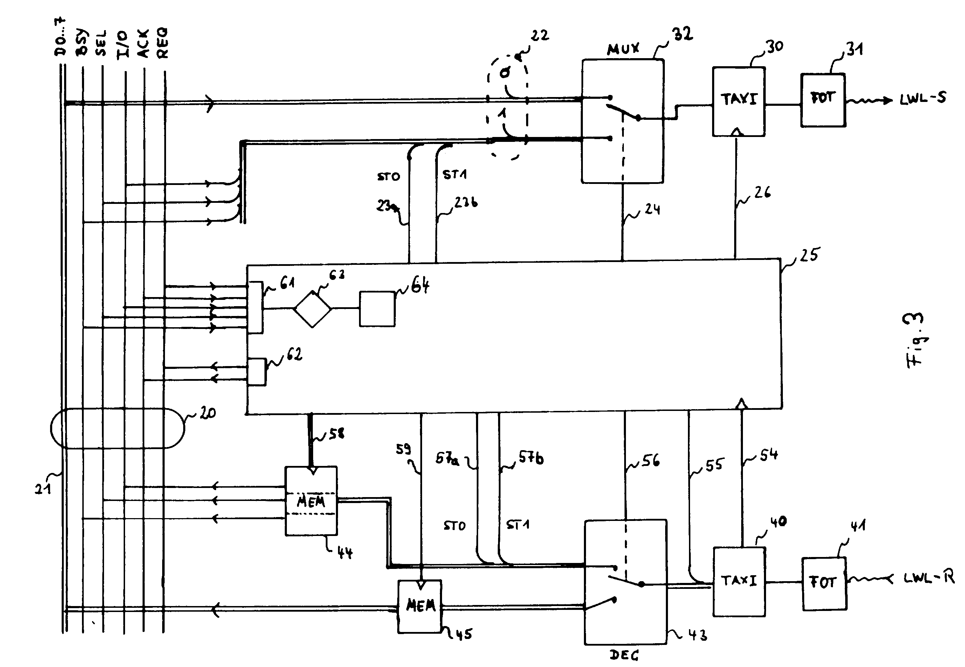

In Fig. 1 ist die Struktur einer Buskopplung skizziert. Zwei Koppeleinheiten KEA 14 und KEB 15 sind über eine Verbindung LNK 16 miteinander verbunden. SEGA und SEGB sind zwei Bus-segmente 20, 20', die durch die Koppeleinheiten KEA und KEB gekoppelt werden. Am Segment SEGA sind zwei Geräte DEV1 11 und DEV2 12 angeschlossen; am Segment SEGB ist ein Gerät DEV3 13 angeschlossen. Weitere Geräte werden in ähnlicher Weise angeschlossen. Von den Bussegmenten sind nur die im folgenden wichtigen Datenleitungen D0..D7 und die Steuerleitungen BSY, SEL, I/O, in Fig. 2 und 3 auch ACK und REQ, dargestellt. Weitere Steuerleitungen (C/D, ATN, MSG und RST) sind vorhanden, aber aus Gründen der Übersichtlichkeit nicht dargestellt, da sie für den Ablauf des Verfahrens nicht wesentlich sind. Es wird für die folgende Beschreibung als Bussystem das "Small Computer System Interface", SCSI, entsprechend der Norm ANSI X3.131-1986 angenommen und im folgenden als bekannt vorausgesetzt. Für die Verbindung können die als TAXI benannten Seriell-Parallel-Wandler der Typen Am 79168 und Am 79169 der Firma Advanced Micro Devices und als optische Transmitter die Typen V23804-E2-T5 und V23800-S2-T5 der Firma Siemens eingesetzt werden.

Eine Verbindung von zwei Geräten am selben Segement, z.B. von DEV1 nach DEV2, erfolgt, ohne daß die Koppler KEA und KEB zur Übertragung der Nutzdaten benötigt werden. Um eine transparente Kopplung zu erreichen, erfolgt dennoch eine Übertragung auf den unbeteiligten Bus. Eine Verbindung zwischen den Segmenten, z.B. von DEV1 nach DEV3, erfordert die Koppler für die Übertragung der Nutzdaten.

Der SCSI-1-Bus kann bis zu acht verschiedene Geräte betreiben, denen während der Buszuordnung, auch als Arbitrierung bezeichnet, eine der acht Datenleitungen D0..D7 zugeordnet ist. Die Datenleitungen werden durch Treiber mit offenem Kollektor betrieben, so daß eine geschaltete Veroderung der Signale auf dem Bus erfolgt und zulässig ist. Mögliche zusätzliche Datenleitungen für Paritätsbits werden in diesem Beispiel nicht benutzt.

Weiterhin sind Steuerleitungen BSY, SEL, I/O, ACK und REQ vorhanden. Alle oder zumindest die Signale BSY und SEL werden über Treiber mit offenem Kollekter in geschalteter Veroderung betrieben. Die Steuerleitungen können die beiden digitalen Zustände L oder "negated" und H oder "asserted" annehmen. Der Übergang von L nach H wird als Aktivierung, der von H nach L als Deaktivierung bezeichnet. Die verschiedenen zulässigen Kombination der Zustände der Steuerleitungen werden als Buszustände bezeichnet.

In Fig.2 ist schematisch der Aufbau einer der beiden gleich aufgebauten Koppeleinheiten in einer ersten Ausführungsform dargestellt. Der Bus 20 umfaßt die genannten Daten- und Steuerleitungen. Die Datenleitungen 21 werden zu einem Multiplexer 32 geführt, der von einer Steuerung 25 gesteuert wird. Der Multiplexer hat eine Breite von 10 Bit. Diese werden für die Übertragung von Daten mit den 8 Datenbits und möglicherweise einem neunten Bit als Paritätsbit beschaltet. Das höchstwertige Bit wird auf 0 gelegt. Die Beschaltung des höchstwertigen Bits mit 0 ist als Bitzuführung 22 dargestellt. Der Ausgang des Multiplexers wird an einen TAXI genannten Serialisierungsmultiplexer 30 gelegt. Durch ein Strobe-Signal 26 der Steuerung werden die Daten übernommen und in serieller Form über den fiberoptischen Sender 31 auf den Lichtwellenleiter LWL-S gegeben. Alternativ zur Übermittlung der Datenbytes D0..7 kann die Steuerung 25 den Multiplexer 32 über die Verbinung 24 auch zur Übermittlung von Statusinformation schalten. Zu diesem Zweck wird das bei Datentransfers auf 0 geschaltete höchstwertige Bit auf 1 verschaltet, wie in der Bitzuführung 22 angedeutet. Die restlichen 7 Bits werden mit den gezeigten und nicht gezeigten Steuerleitungen beaufschlagt. Die Steuerung ist ferner durch den Eingangsblock 61 mit allen Statusleitungen verbunden und kann deren Zustand lesen.

Für den Empfang der über den zweiten Lichtwellenleiter LWL-R eingehenden Daten wird das vom fiberoptischen Empfänger 41 bereitgestellte elektrische Signal vom Empfangs-TAXI 40 decodiert. Dieser sendet ein Signal über die Verbindung 54 an die Steuerung 25, wenn ein Paket empfangen wurde und an den Ausgängen bereitsteht. Das höchstwertige Bit wird über die Verbindung 55 von der Steuerung 25 direkt gelesen. Da Datenpakete eine 0 und Steuerpakete eine 1 als höchstwertiges Bit haben, kann die Steuerung 25 nach Eintreffen eines Datenpakets zunächst dessen Art bestimmen. Demgemäß schaltet die Steuerung 25 den Decoder 43 über die Verbindung 56 in der Art, daß Datenpakete an den Speicher 45 und Steuerpakete an den Speicher 44 gelangen. Der Datenspeicher 45 ist so gestaltet, daß durch Aktivierung der Verbindung 59 die Daten übernommen und gespeichert und für die Dauer des Signals auf der Verbindung 59 auch auf den Bus gelegt werden. Durch Deaktivierung der Verbindung 59 können also die Datenleitungen freigegeben und damit von einem Teilnehmer am Bus gesetzt werden. Entsprechend ist die Verbindung 58 so gestaltet, daß z.B. durch eine Maske nur die jeweils benötigten Statusleitungen aus dem Speicher 44 gesetzt werden, wobei diese Maske in der Steuereinheit bestimmt wird.

Die Steuerung vergleicht im Vergleicher 63 ständig den Zustand der Steuerleitungen des an sie angeschlossenen Bus-segments 20 mit einem intern gespeicherten bisherigen Zustand 64, so daß Änderungen erkannt werden. Liegt eine Änderung vor, so wird in der beschriebenen Art zunächst ein Datenpaket und dann ein Steuerpaket gesendet. Der aktuelle Buszustand wird sodann im Speicher 64 gespeichert, um weitere Buszustandsänderungen zu erkennen. Beim Empfang eines Datenpakets wird dieses in dem Speicher 45 gespeichert. Entsprechend wird ein Steuerpaket im Speicher 44 gespeichert. In beiden Fällen werden die Daten auf den Bus geschaltet. Beim Empfang eines Steuerpakets wird durch Inhibitoren dafür gesorgt, daß die Änderung des Busstatus nicht zu einer Übertragung führt, sondern lediglich in dem Speicher 64 gespeichert wird.

Um den Statusspeicher 44 und den Datenspeicher 45 richtig zu aktivieren, hat die Steuereinheit einen, nicht dargestellten, Speicher dafür, ob am angeschlossenen Bussegment ein Target oder ein Initiator aktiv ist. Eine Arbitrierung wird durch Aktivierung des Signals BSY begonnen. Durch anschließende Auswertung des Signals SEL zusammen mit dem Signal I/O wird bestimmt, welcher der durch die Arbitrierung und anschließende Selektion bestimmten Teilnehmer ein Initiator und welcher ein Target ist. Die Details hierzu sind dem Standard zu entnehmen. Dabei wird berücksichtigt, ob die Signale BSY bzw. SEL von einem Busteilnehmer aktiviert wurden oder als Resultat eines empfangenen Steuerpakets von der Koppeleinheit gesetzt wurden. Ist an dem Bussegment ein Target, so wird die Maske für den Speicher 44 so gesetzt, daß das Signal ACK von der Koppeleinheit beaufschlagt und die Signale REQ und I/O vom Target bestimmt werden. Bei einem Initiator am Bussegment sind die Verhältnisse invertiert. Ist ein Target aktiv, so bedeutet ein aktives Signal I/O, daß der Target sendet; dem-gemäß wird der Speicher 45 über die Verbindung 59 von der Koppeleinheit nicht aktiviert, auch wenn Datenpakete eintreffen.

Für den Datentransfer sind im SCSI-Protokoll zwei Modi vorgesehen, der Asynchron- und der Synchron-Modus. Für die Quittungssignale werden dabei die Steuerleitungen ACK und REQ benutzt, wobei immer der Initiator das Signal ACK und das Target das Signal REQ schaltet. Bei als Eingabe bezeichneten Datentransfers vom Target zum Initiator verwendet das Target das Signal REQ als Übernahmesignal und der Initiator das Signal ACK als Quittungssignal. Bei als Ausgabe bezeichneten Datentransfers vom Initiator zum Target verwendet der Initiator das Signal ACK als Übernahmesignal und das Target das Signal REQ als Quittungssignal. Die Steuerleitung I/O bestimmt die Übertragungsrichtung. Im als asynchron bezeichneten Verfahren legt der jeweilige Sender das zu übertragende Byte auf die Datenleitungen und aktiviert sein Übernahmesignal. Der Empfänger übernimmt die Daten und aktiviert sein Quittungssignal. Daraufhin nehmen Sender und Empfänger das Übernahmesignal und das Quittungssignal zurück und wiederholen die Schritte für die Übertragung des nächsten Bytes. Eine Koppeleinheit dieser ersten Ausführungsform erkennt jede Änderung von REQ bzw. ACK und überträgt die Daten sowie die neue Belegung der Steuerleitungen. Für die Übertragung eines Bytes werden damit zwei Daten- und zwei Steuerpakete in Richtung vom Sender zum Empfänger und die gleiche Anzahl und Art in Richtung vom Empfänger zum Sender übertragen.

Im als synchron bezeichneten Modus werden in einer Vorphase die Parameter gesetzt. Diese Parameter legen die Puffergröße im Empfänger, z.B. 512 Byte, und den minimalen Abstand zwischen zwei Sendeschritten, z.b. 200 nsec, fest. Der Sender legt seine Daten auf den Datenbus, aktiviert sein Übernahmesignal und deaktiviert es wieder, ohne auf das zugehörige Quittungssignal zu warten. Dieser Vorgang kann vom Sender mit der durch den minimalen Abstand von Sendeschritten vorgegebenen Maximalfrequenz solange wiederholt werden, bis die Anzahl der noch nicht quittierten gesendeten Bytes die verbeinbarte Puffergröße nicht überschreitet. Der Empfänger aktiviert die Quittungsleitung für jedes empfangene Byte, sobald er den Platz im Empfangspuffer wieder frei hat.

Im asynchronen Fall ist eine Verzögerung durch eine geringe Bandbreite der Übertragung auf dem Lichtwellenleiter ohne wesentliche Bedeutung, weil die Koppeleinheiten erst nach Abschluß der jeweiligen Übertragung wieder tätig werden. Im synchronen Fall jedoch muß die Übertragungsleitung so ausgelegt sein, daß alle Pakete innerhalb der höchsten zulässigen von den Teilnehmern vereinbarten Zykluszeit auch übertragen werden können, weil der Sender nicht auf Quittungssignale wartet. Da pro Byte vier Pakete gesendet werden, ist für eine Verbindung mit 5 MByte/sec eine Übertragungsgeschwindigkeit von 200 MBit/sec notwendig. Eine Unterdrückung von redundanten Datenpakten ist möglich. Wegen der Unterstützung von sowohl asynchroner Übertragung wie auch synchroner Übertragung, ohne daß die Koppeleinheit diese Betriebsart erkennen muß, sind jedoch die Aktivierung und Deaktivierung der Steuersignale REQ und ACK als Steuerpakete zu übertragen, so daß weiterhin drei Pakete pro Byte zu übertragen sind, also die Bandbreite nur zu einem Drittel ausgenutzt ist.

Eine zweite Ausführungsform erreicht eine geringere notwendige Bandbreite im Synchronmodus und einen höheren Durchsatz bezogen auf die Bandbreite im Asynchronmodus dadurch, daß die Signale ACK und REQ nicht wie die anderen Steuersignale durch ein Steuerpaket übertragen werden. Vielmehr wird das Eintreffen eines Datenpakets dazu benutzt, das Übernahmesignal zu aktivieren. Dabei soll das Verfahren so gestaltet werden, daß der Ablauf unabhängig von Synchron- oder Asynchronmodus erfolgt. Es muß also bei asynchroner Benutzung die auch als "handshake" bezeichnete Methode eingehalten werden, bei der Pegelwechsel von ACK und REQ durch Pegelwechsel auf der jeweils anderen Leitung veranlaßt werden. Im Synchronmodus jedoch sind die Pegelwechsel jeweils unabhängig voneinander.

Dafür wird eine gegenüber der ersten Ausführungsform veränderte Schaltung einer Koppeleinheit verwendet, wie sie in Fig. 3 dargestellt ist. Die Signale ACK und REQ werden nicht als Bestandteil eines Status-Pakets übertragen. Vielmehr werden die dafür zur Verfügung stehenden Bits durch eine in zwei Bits codierte Teilmenge des Busstatus ersetzt, welche als ST0 und ST1 über die Verbindungen 23a und 23b dem Multiplexer zugeführt werden. Auf der Empfangsseite werden diese Signale über die Verbindungen 57a und 57b in die Koppeleinheit übernommen; die entsprechenden Teile des Speichers 44 entfallen. Dafür werden die Signale ACK und REQ durch die Ausgabeschaltung 62 der Steuerung 25 direkt auf den Bus geschaltet, wobei beide Signale unabhängig voneinander geschaltet werden können.

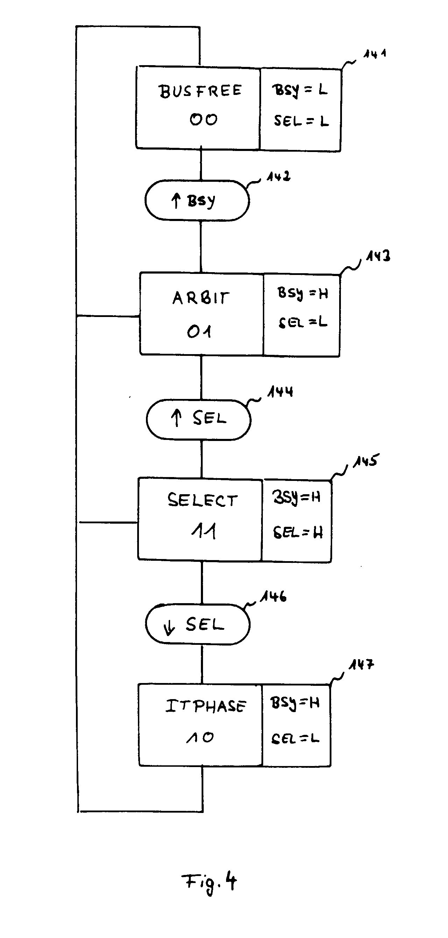

Die in den Bits ST0 und ST1 codierten Zustände werden durch einen Ablauf bestimmt, der in Fig. 4 dargestellt ist. Der Zustand BUSFREE wird durch inaktives BSY und inaktives SEL statisch gekennzeichnet, d.h., daß bei dieser Kombination immer unabhängig vom Vorzustand der Zustand BUSFREE angenommen und ein Steuerpaket mit dem Statuscode 00 gesendet wird. Durch Aktvierung von BSY wird die Arbitrierung eingeleitet. Dabei wird die Initiator/Target-Bestimmung in der Koppeleinheit begonnen. Diejenige Koppeleinheit, bei der der Zustandsübergang nach ARBIT durch eine Busaktivität erfolgte, hat bis zum nächsten BUSFREE den Initiator an seinem Bussegment. Diejenige Koppeleinheit, die auf Grund eines übermittelten Steuerpakets das Bussegment aus dem Zustand BUSFREE in den Zustand ARBIT bringt, hat das Target. Mit Abschluß der Arbitrierung beginnt die Adressierungsphase SEL, indem der Initiator das Signal SEL aktiviert und die dem gewünschten Teilnehmer zugeordnete Datenleitung aktiviert. Diese Adressierung wird quittiert, indem der Initiator bei Beibehalten von SEL das Signal BSY deaktiviert. Das adressierte Target quittiert die Anwahl, indem es seinerseit wieder BSY aktiviert. Dieser Schitt ist in Fig.4 der Übersichtlichkeit halber weggelassen. Das SCSI-Protokoll sieht ferner vor, daß, wenn das Target die Busbelegung beginnt und daher vorübergehend als Initiator erscheint, durch Aktivierung der I/O-Leitung dieser Fall signalisiert wird und entsprechend ein Rollentausch stattfindet. Nach Abschluß der Adressierungsphase SELECT jedenfalls steht fest, an welchem Bussegment der Initiator und an welchem das Target vorhanden ist. Durch Deaktivierung von SEL wird die Datentransferphase ITPHASE eingeleitet, die durch den Code 10 gekennzeichnet ist. Die Signale ACK und REQ sind nur in der Datentransferphase von Signifikanz; und nur in der Datentransferphase tritt die zu beschriebende implizite Generierung von ACK und REQ auf.

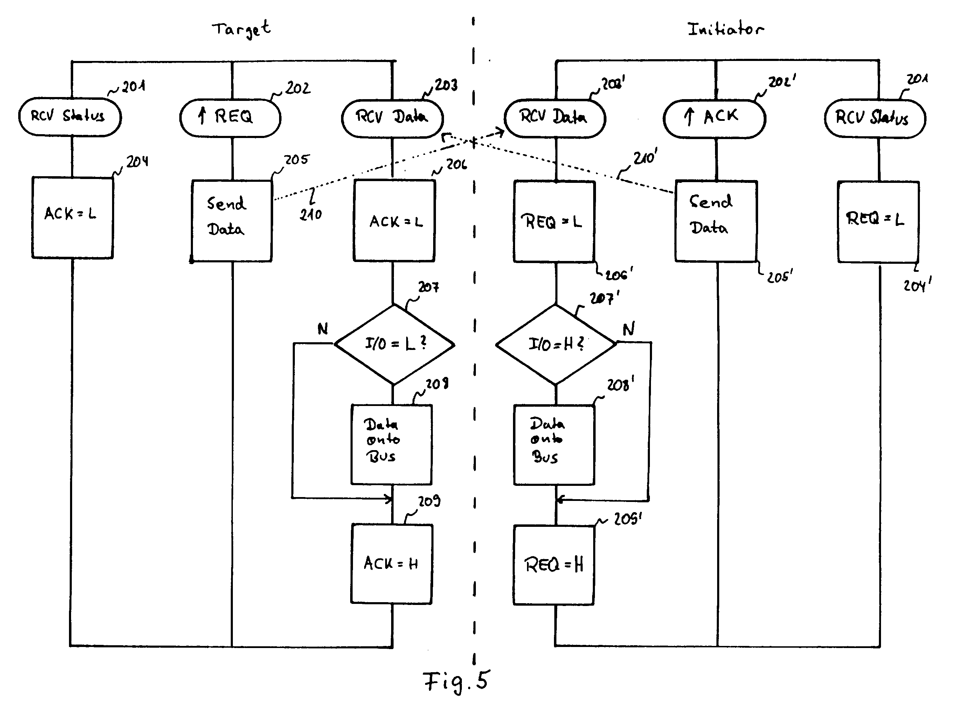

Das Verhalten von Target und Initiator in der Datentransferphase ist in Fig. 5 skizziert. Das spiegelbildliche Verhalten ist unmittlebar sichtbar. Es bedeutet, daß der Ablauf in beiden Koppeleinheiten der gleiche ist und nur, abhängig davon, ob am Bussegement der Initiator oder das Target aktiv ist, die Datenwerte anders ausgewählt werden, was durch Multiplexer einfach und ohne Zeitverlust im Ablauf zu bewerkstelligen ist.

Angenommen, daß Target sendet im asynchronen Modus ein Byte. Dabei setzt es das Signal I/O, was zur Übertragung eines Steuerpakets führt. Ferner werden die zu übertragenden Daten auf den Bus geleget. Sind diese Signale stabil, so aktivert das Target das Signal REQ. Dieser Wechsel wird als Schritt 202 erkannt und führt dazu, daß ein Datenpaket gesendet wird. Ein Steuerpaket wird nicht gesendet. Dies ist durch den gepunkteten Pfeil 210 angedeutet. Die Koppeleinheit seitens des Intiators empfängt die Daten durch Schritt 203'. Der Schritt 206' hat zunächst keine Wirkung, da REQ bereits vorher deaktiviert ist. Da I/O aktiv ist, führt die Abfrage 207 dazu, daß mit Schritt 208' die empfangenen Daten auf den Bus geschaltet werden. Anschließend wird das Signal REQ aktiviert und auf das nächste Ereignis gewartet. Dieses besteht darin, daß der Initiator das Signal ACK aktiviert, welches von der Koppeleinheit als Schritt 202' erkannt wird und zu einer Übertragung der aktuellen Daten auf dem Datenbus zur Koppeleinheit des Targets führt. Diese Daten sind dieselben wie die soeben empfangenen und daher im Grunde redundant. Sie dienen lediglich zur Signalisierung, daß das Signal ACK gesetzt wurde. Die Koppeleinheit des Targets empfängt diese Daten im Schritt 203. Schritt 206 ist gleichfalls zunächst ohne Wirkung, da ACK bereits inaktiv ist. Da I/O aktiv ist, wird Schritt 208 nicht ausgeführt. Anschließend wird mit Schritt 209 das Signal ACK aktiviert. Als Reaktion deaktiviert das Target das Signal REQ. Dieser Zustandwechsel veranlaßt die Koppeleinheit nach einer, weiter unten erläuterten, Wartezeit (in Fig. 5 nicht dargestellt) ein Steuerpaket ohne Datenpaket zu senden. Der Inhalt dieses Steuerpakets ist unverändert gegenüber dem zuletzt gesendeten; sein Eintreffen führt in Schritt 201' dazu, daß im Schritt 204' das Signal REQ deaktiviert wird. Der Initiator nimmt daraufhin das Signal ACK zurück, was in gleicher Weise zur Übermittlung eines redundaten Status führt, welcher als Schritt 201 und 204 auf dem Bussegement des Targets das Signal ACK deaktiviert. Anstelle eine redundanten Steuerpakets kann auch ein zusätzlicher, als "command" bezeichneter Datenpfad des TAXI Multiplexers verwendet werden, welcher einen zusätzlichen "out-of-band" Signalpfad bereitstellt und bereits im TAXI als solcher decodiert wird. Eine Übertragung in Gegenrichtung erfolgt in ensprechender Weise.

Die bislang redundanten Schritte 206 und 206' werden im synchronen Modus wirksam. Eine Übertragung im sychronen Modus vom Target zum Initiator beginnt, nachdem die Parameter verhandelt sind, durch Setzen von I/O. Danach werden die Datenleitungen beaufschlagt und REQ aktiviert, was zum Senden der Daten führt. Das Target wartet jedoch nicht die Aktiverung von ACK ab, sondern deaktiviert innerhalb der verhandelten Zeit das Signal REQ, verändert die Daten und setzt nach Ablauf der verhandelten Zeit wieder das Signal REQ. Die Koppeleinheit erkennt die Deaktivierung von REQ und beginnt eine vorbestimmte Wartezeit, die in der Größenordnung der Übertragungszeit eines Pakets über die Übertragungsleitung liegt. Findet innerhalb dieser Wartezeit eine erneute Aktivierung von REQ statt, so werden im Schritt 205 die veränderten Daten gesendet und die Deaktivierung von REQ wird ingnoriert. Mit Eintreffen dieser Daten wird jetzt Schritt 206' wirksam, da REQ immer noch aktiv gesetzt war. Schritt 206' deaktviert das Signal REQ, woraufhin die Daten auf den Bus gelegt werden (Schritt 208') und REQ erneut aktiviert wird (Schritt 209'). In gleicher Art werden die Aktivierungen der ACK-Signale seitens des Initiators im Schritt 202' erkannt und führen zur Übertragung jeweils eines Datenpaketes, welches im Schritt 206 zunächst ACK deaktiviert und im Schritt 209 ACK erneut aktiviert. Dabei ist eine minminale Wartezeit einzuhalten, was bei einem getaktetem Schaltwerk in der Steuerung einfach zu erreichen ist und andernfalls durch Implulsformer oder monostabile Multivibratoren erreicht werden kann.

Wird allerdings während der Wartezeit nach einer Deaktivierung von REQ keine erneute Aktivierung von REQ erkannt, dann wird ein Steuerpaket ausgesendet, welches identisch zu dem als letzten ausgesendeten Steuerpaket ist. Der Empfang eines beliebigen Steuerpakets setzt im Empfänger das Signal REQ zurück, womit an den Initiator die Deaktivierung von REQ seitens des Targets übertragen wurde.

Bei der inversen Übertragungsrichtung, welche durch das Signal I/O erkannt wird, wird lediglich auf der durch I/O bestimmten Seite die Ausgabe des Inhalts des Datenpakets auf den Bus unterdrückt. Die Steuersignale werden wie vor behandelt; lediglich wird durch das andere Verhalten von Target und Initiator eine andere Reihenfolge bewirkt, indem ACK vor REQ aktiviert wird.

Wesentlich ist dabei, daß die Deaktivierung von REQ und ACK nicht zu einem redundanten Steuerpaket führt. Dies wird durch eine Latenz- oder Wartezeit erreicht, die im wesentlichen gleich der Übertragungszeit für ein Paket auf der Verbindung ist. Wird innerhalb dieser Latenzzeit das Signal REQ bzw. ACK erneut aktiviert, dann wird die Übertragung des redundanten Steuerpaketes unterdrückt und statt dessen das Datenpaket als implizite Nachricht verwendet. Solange also der Sender im Synchronmodus nahe an der Bandbreite der Übertragungsleitung arbeitet, werden die Signale REQ bzw. ACK implizit über die Datenpakete übertragen. Sendet der Sender erheblich langsamer, so werden zusätzliche Steuerpakete eingeschoben, die eine Deaktivierung von REQ bzw. ACK veranlassen. Damit ist das Koppelverfahren unverändert für den synchronen und asynchronen Modus wirksam, ohne daß die Koppeleinheit diese Modi berücksichtigen muß, und erreicht dennoch nahezu die volle Bandbreite der Verbindung.

Die bisherige Darstellung verwendete das SCSI-1 Bussystem mit 8 Bit Datenbreite. Eine Übertragung auf das 16-Bit SCSI-2 Bussystem nach ANSI X3T9.2 885D ist einfach möglich. Hierbei wird der Multiplexer 32 mit einem weiteren Eingang versehen, an den die Datenleitungen D8..D15 gelegt werden. Auch diese Daten erhalten ein höchstwertiges Bit 0 zur Kennzeichnung als Datenpaket. Zur Übertragung von Daten werden immer zwei Datenpaktete übertragen und im Empfänger durch Erweiterung des Decoders 43 und Verdopplung des Speichers 45 auf den Datenbus verteilt, indem immer das erste Paket die Datenleitung D0..D7 und das zweite die Datenleitungen D8..D15 beaufschlagt. Entsprechend kann eine Erweiterung auf 32 Bit erfolgen.

Die Erfindung ist nicht auf SCSI-Bussysteme beschränkt, sondern kann beispielsweise auch auf andere Bussysteme übertragen werden, bei denenen ein asynchroner und ein synchroner Modus zur Datenübertragung vorliegen.

## Patentansprüche

1. Verfahren zur Kopplung von Segmenten eines Bussystems mit Daten- und Steuerleitungen durch Übertragung von Bitpaketen vorgegebener Anzahl von Bits pro Paket, die kleiner als die Summe der Daten- und Steuerleitungen ist, mit den Merkmalen:
- Die Bitpakete enthalten einen Indikator zur Unterscheidung in Datenpakete und Steuerpakete, wobei Datenpakete den Zustand der Datenleitungen und Steuerpakete den von Steuerleitungen übertragen,
- aus den Zustandsübergängen der Steuerleitungen wird ein Buszustand gebildet,
- die Steuerpakete enthalten einen Indikator, der einen von mindestens zwei Übertragungsmodi auswählt,
- in einem ersten Übertragungsmodus beeinflußt der Empfang von Datenpaketen nur Datenleitungen,
- in einem zweiten Übertragungsmodus beeinflußt der Empfang von Datenpaketen neben Datenleitungen auch durch den jeweiligen Buszustand bestimmte Steuerleitungen.

2. Verfahren nach Anspruch 1, wobei im zweiten Übertragungsmodus durch den Buszustand eine Steuerleitung als Übernahmesignal bestimmt ist, der Empfang eines Datenpakets dieses Übernahmesignal deaktiviert, abhängig vom Buszustand die Datenleitungen beaufschlagt oder den Inhalt des Datenpakets verwirft und danach das Übernahmesignal aktiviert.

3. Verfahren nach Anspruch 2, wobei im zweiten Übertragungsmodus der Empfang eines Steuerpakets das Übernahmesignal deaktiviert.

4. Verfahren nach Anspruch 2, wobei das Senden des Datenpakets durch eine Aktivierung des Übernahmesignals auf dem Bussegment des Senders ausgelöst wird und die Deaktivierung des Übernahmesignals nach einer vorbestimmten Latenzzeit zu einer Aussendung eines Steuerpakets führt, wenn innerhalb der Latenzzeit keine erneute Aktivierung des Übernahmesignals erfolgt.

5. Verfahren nach Anspruch 3 oder 4, wobei die Übertragungseinrichtung zusätzlich zu Datenpaketen und Steuerpakten die Übertragung von Kommandopaketen zuläßt und anstelle eines Steuerpakets ein vorbestimmtes Kommandopaket verwendet wird.

6. Verfahren nach einem der vorhergehenden Ansprüche, wobei durch den Buszustand sowohl eine Übernahme- als auch ein Quittungssignal bestimmt werden, diese in verschiedenen Bussegmenten aktiviert werden und das Quittungssignal in gleicher Art wie das Steuersignal in Gegenrichtung übertragen wird.

7. Verfahren nach einem der vorhergehenden Ansprüche, wobei als Bussystem das "Small Computer System Interface" (SCSI) nach ANSI X3.131-1986, ANSI X3T9.2 855D oder einer Weiterentwicklung davon verwendet wird.

8. Verfahren nach einem der vorhergehenden Ansprüche, wobei die Datenleitungen des Bussystems zusammen mehr Bits haben als in einem Datenpaket übertragen werden kann und die Daten als eine vorbestimmte Folge fester Anzahl von Datenpaketen übertragen werden, wobei als Empfang eines Datenpakets der Empfang des letzten der fest vorgegebenen Anzahl von Datenpaketen gelten soll.

## Claims

1. Method for coupling segments of a bus system having data and control lines by transmission of bit packets with a predetermined number of bits per packet, which number is less than the sum of the data and control lines, having the features:
- The bit packets contain an indicator to distinguish between data packets and control packets, data packets transmitting the status of the data lines and control packets transmitting that of control lines,
- a bus status is formed from the status changes of the control lines,
- the control packets contain an indicator which selects one of at least two transmission modes,
- in a first transmission mode, the reception of data packets influences only data lines,
- in a second transmission mode, the reception of data packets also influences control lines, which are defined by the respective bus status, in addition to the data lines.

2. Method according to Claim 1, a control line being defined as a transfer signal by the bus status in the second transmission mode, the reception of a data packet deactivating this transfer signal, acting on the data lines or rejecting the contents of the data packet as a function of the bus status and, after this, activating the transfer signal.

3. Method according to Claim 2, the reception of a control packet deactivating the transfer signal in the second transmission mode.

4. Method according to Claim 2, the transmission of the data packet being initiated by activation of the transfer signal on the bus segment of the transmitter, and the deactivation of the transfer signal leading after a predetermined latency time to transmission of a control packet if there is no renewed activation of the transfer signal within the latency time.

5. Method according to Claim 3 or 4, the transmission device permitting the transmission of command packets in addition to data packets and control packets, and a predetermined command packet being used instead of a control packet.

6. Method as claimed in one of the preceding claims, both a transfer signal and an acknowledgement signal being determined by the bus status, which signals are activated in various bus segments, and the acknowledgement signal being transmitted in the same manner as the control signal, in the opposite direction.

7. Method as claimed in one of the preceding claims, the "Small Computer System Interface" (SCSI) in accordance with ANSI X3.131-1986, ANSI X3T9.2 855D or a further development thereof being used as the bus system.

8. Method as claimed in one of the preceding claims, the data lines of the bus system together having more bits than can be transmitted in a data packet, and the data being transmitted as a predetermined sequence of a fixed number of data packets, reception of the last of the permanently predetermined number of data packets being intended to be regarded as reception of a data packet.

## Revendications

1. Procédé de couplage de segments d'un système de bus, comportant des lignes de données et des lignes de commande, au moyen de la transmission de paquets de bits, avec un nombre prédéterminé de bits par paquets qui est inférieur à la somme des lignes de données et de commande, ayant les caractéristiques suivantes :
- les paquets de bits contiennent un indicateur pour différencier les paquets de données et les paquets de commande, les paquets de données transmettant l'état des lignes de données et les paquets de commande transmettant l'état des lignes de commande,
- on forme un état de bus à partir des transitions d'états des lignes de commande,
- les paquets de commande contiennent un indicateur qui sélectionne un des modes de transmission - il existe au moins deux modes de transmission -,
- dans un premier mode de transmission, la réception de paquets de données influence seulement des lignes de données,
- dans un deuxième mode de transmission, la réception de paquets de données influence non seulement les lignes de données mais aussi des lignes de commande déterminées par l'état courant du bus.

2. Procédé selon la revendication 1, dans lequel, dans le deuxième mode de transmission, une ligne de commande est déterminée par l'état du bus comme signal de réception, la réception d'un paquet de données désactive ce signal de réception, alimente les lignes de données ou rejette le contenu du paquet de données en fonction de l'état du bus et active ensuite le signal de réception.

3. Procédé selon la revendication 2, dans lequel, dans le deuxième mode de transmission, la réception d'un paquet de commande désactive le signal de réception.

4. Procédé selon la revendication 2, dans lequel l'émission du paquet de données est déclenchée par une activation du signal de réception sur le segment de bus de l'émetteur et la désactivation du signal de réception conduit après un temps d'attente prescrit à une émission d'un paquet de commande si aucune nouvelle activation du signal de réception n'a eu lieu pendant le temps d'attente.

5. Procédé selon la revendication 3 ou 4, dans lequel le dispositif de transmission autorise en plus des paquets de données et des paquets de commande la transmission de paquets d'instruction et dans lequel on utilise à la place d'un paquet de commande un paquet d'instruction prédéterminé.

6. Procédé selon l'une des revendications précédentes, dans lequel l'état du bus détermine aussi bien un signal de réception qu'un signal d'accusé de réception qui sont activés dans différents segments de bus et le signal d'accusé de réception est transmis en sens contraire de la même manière que le signal de commande.

7. Procédé selon l'une des revendications précédentes, dans lequel on utilise comme système de bus le "Small Computer System Interface" (SCSI) selon les normes ANSI X3.131-1986 ou ANSI X3T9.2 855D ou une variante de ces systèmes de bus.

8. Procédé selon l'une des revendications précédentes, dans lequel les lignes de données du système de bus ont ensemble un plus grand nombre de bits que le nombre de bits pouvant être transmis dans un paquet de données et dans lequel on transmet les données comme une suite prédéterminée d'un nombre fixé de paquets de données, la réception du dernier des paquets de données, qui sont en nombre fixé, devant être prise en compte comme réception d'un paquet de données.
